# FASCICULE DE BREVET EUROPEEN

(11) **EP 2 576 995 B1**
(45) Date de publication et mention de la délivrance du brevet: **06.08.2014**
(21) Numéro de dépôt: 11727220.3
(22) Date de dépôt: 17.05.2011
(51) Int. Cl.: F01D 15/10, F01D 15/08, F01D 15/12, F02C 7/32, F01D 25/16, F16C 21/00

(54) **BOITE D'ENGRENAGES DANS UNE TURBOMACHINE**
GETRIEBE EINER TURBOMASCHINE
GEARBOX IN A TURBOMACHINE

(30) Priorité: 25.05.2010 FR 1054038
(43) Date de publication de la demande: 10.04.2013
(73) Titulaire: Snecma, 75015 Paris (FR)
(72) Inventeur: GALIVEL, Jean-Pierre, Elie, F-77550 Moissy-Cramayel Cedex (FR)
(74) Mandataire: Ramey, Daniel
(86) Numéro de dépôt international: PCT/FR2011/051107
(87) Numéro de publication internationale: WO 2011/148078

(56) Documents cités:
- EP-A2- 0 814 281
- DE-A1- 3 830 446
- US-A- 2 908 187
- US-A- 3 982 390

## Description

La présente invention concerne une boîte d'engrenages destinée à l'entraînement en rotation d'équipements d'une turbomachine.

Dans une turbomachine, différents équipements, tels que notamment des pompes pour la production d'énergie hydraulique, l'alimentation en carburant, la lubrification, des générateurs électriques pour la production de puissance électrique, etc., sont entraînés en rotation par une boîte d'engrenages reliée à un arbre de la turbomachine.

Chaque équipement comprend un arbre tournant couplé en rotation à un arbre de transmission de la boîte d'engrenages. Cet arbre de transmission porte extérieurement une roue dentée qui est en prise avec un pignon d'entraînement lequel est couplé par un train d'engrenages à un arbre de compresseur de la turbomachine.

L'arbre de transmission est guidé en rotation à ses extrémités dans deux paliers à roulement dont les bagues externes sont fixées sur des parois de la boîte d'engrenages. Le document DE 3830 446 A1 décrit une boîte d'engrenages comme disposée dans le préambule de la revendication indépendante 1.

Afin de réduire les coûts des boîtes d'engrenages, on a recours à des roulements standardisés. De ce fait, les roulements utilisés sont souvent surdimensionnés par rapport à l'utilisation requise. L'utilisation de roulements spécialement adaptés aux utilisations prévues permettrait de réduire la masse de la boîte d'engrenages mais de façon très faible puisque cela n'aurait que peu ou pas d'impact sur le dimensionnement de la boîte d'engrenages, des différents éléments de visserie, des moyens de lubrification, etc.

Les parois de la boîte d'engrenages comprennent également des bossages de montage des paliers à roulement. Ces parties de la boîte sont également renforcées pour permettre le passage des efforts en fonctionnement, ce qui conduit à alourdir la boîte d'engrenages. De plus, chaque palier nécessite un circuit spécifique de lubrification, ce qui complique encore la conception de la boîte d'engrenages.

La présente invention a notamment pour but d'apporter une solution simple, efficace et économique à ces problèmes de la technique actuelle.

A cet effet, elle propose une boîte d'engrenages dans une turbomachine pour l'entraînement en rotation d'au moins un équipement tournant, tel par exemple qu'un alternateur ou une pompe, comprenant un arbre de transmission guidé en rotation dans des paliers et portant une roue dentée en prise avec au moins un pignon d'entraînement en rotation, caractérisée en ce que l'un des paliers est un palier à roulement monté à l'intérieur de la roue dentée et dans un plan radial contenant la roue dentée et le pignon d'entraînement et en ce qu'un autre palier est un palier lisse de reprise d'efforts de basculement de l'arbre de transmission.

Selon l'invention, l'arbre de transmission n'est plus guidé que par un seul palier à roulement, l'autre palier étant un palier lisse qui est dépourvu d'éléments roulants. L'agencement du palier à roulement dans le plan radial contenant la roue dentée et le pignon d'entraînement permet de reprendre toute la charge radiale de l'engrènement entre la roue dentée et le pignon d'entraînement.

Le palier lisse n'assure pas la reprise des efforts radiaux mais uniquement la reprise des efforts de basculement de l'arbre de transmission. Il est donc possible de réduire beaucoup sa dimension, ce qui permet d'envisager une optimisation de la masse de la boîte d'engrenages.

Le remplacement d'un palier à roulement par un palier lisse permet de réduire le nombre de pièces à coût élevé dans la boîte d'engrenages. De plus, dans la mesure où le palier lisse est faiblement chargé comme c'est le cas dans les boites d'engrenages selon l'invention, il ne nécessite pas d'alimentation spécifique en huile et s'avère plus fiable qu'un palier à roulement. La lubrification du palier lisse est en effet réalisée par le brouillard d'huile environnant.

Selon une autre caractéristique de l'invention, les deux paliers sont montés aux extrémités de l'arbre de transmission.

Avantageusement, le déplacement axial de l'arbre dans la boite d'engrenages selon l'invention est limité par deux butées axiales dont l'une est formée par un rebord annulaire de l'extrémité arrière de la bague externe du palier à roulement et l'autre est formée par un rebord annulaire avant de l'arbre de transmission coopérant avec l'extrémité arrière d'une bague fixe du palier lisse.

Ces deux butées permettent de limiter le déplacement axial de l'arbre de transmission dû au glissement du roulement sur sa piste et permet ainsi de garantir un bon alignement radial du roulement et de la roue dentée.

Selon encore une autre caractéristique de l'invention, la roue dentée est reliée à l'arbre de transmission par une paroi tronconique.

Avantageusement, le palier lisse comprend une bague montée dans un alésage d'une paroi de la boîte d'engrenages.

Selon une autre caractéristique de l'invention, l'extrémité de l'arbre de transmission guidée en rotation dans le palier lisse forme un moyeu à surface interne cannelée destiné à recevoir une extrémité cannelée d'un arbre rotatif de l'équipement tournant.

Le palier lisse peut être en bronze ou en matériau composite.

Selon encore une autre caractéristique de l'invention, le palier à roulement comprend une bague interne montée sur une portée cylindrique de l'arbre de transmission et une bague externe portée par un embout cylindrique solidaire d'une paroi de la boîte d'engrenages.

Le palier à roulement peut être un palier du type à rouleaux ou à billes. Le palier à rouleaux présente l'avantage par rapport à un palier à roulement à billes d'assurer une meilleure reprise des charges radiales d'engrènement de la roue dentée.

L'invention concerne également une turbomachine, telle qu'un turboréacteur ou un turbopropulseur, comprenant une boîte d'engrenages telle que décrite précédemment.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en coupe axiale d'une turbomachine ;
- la figure 2 est une vue schématique en coupe axiale d'une partie d'une boîte d'engrenages selon la technique antérieure ;
- la figure 3 est une vue schématique en coupe axiale d'une partie d'une boîte d'engrenages selon l'invention
- la figure 4 est une vue schématique en coupe axiale d'une variante de réalisation de la boite d'engrenages selon l'invention.

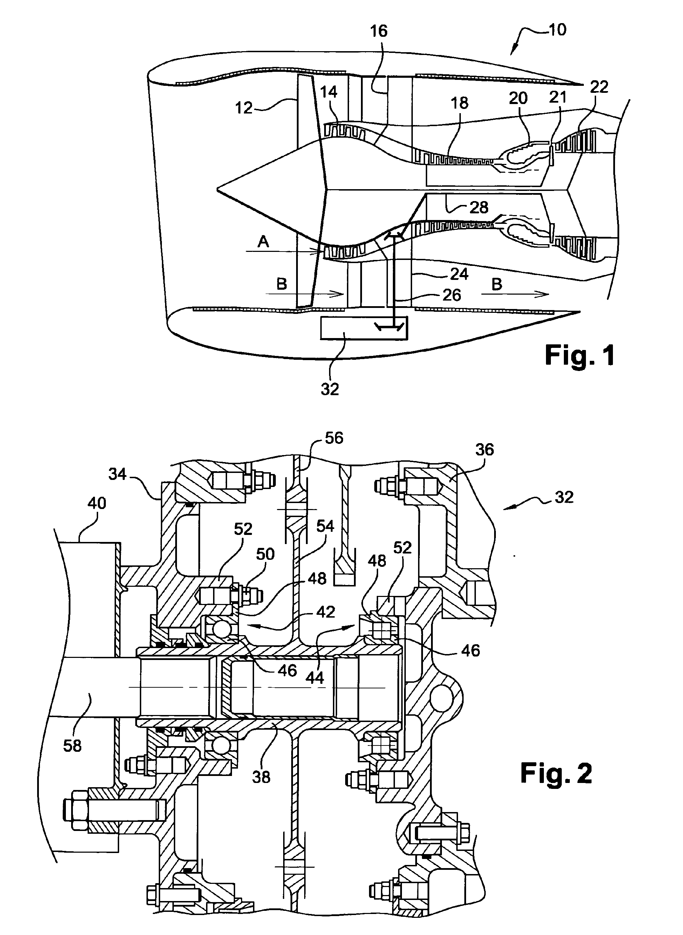

On se réfère tout d'abord à la figure 1, qui représente une turbomachine 10 comprenant d'amont en aval une soufflante 12, un compresseur basse pression 14, un carter intermédiaire 16, un compresseur haute pression 18, une chambre de combustion 20, une turbine haute pression 21 et une turbine basse pression 22. L'air entrant dans la turbomachine se divise en un flux d'air primaire (flèche A) qui circule à l'intérieur des compresseurs basse et haute pression 14, 18 vers la chambre de combustion 20 puis à travers les turbines haute et basse pression 21, 22, et en un flux d'air secondaire (flèches B) qui contourne le compresseur 14, 18, la chambre de combustion 20 et la turbine 21, 22.

Le carter intermédiaire 16 comprend des bras structuraux 24 s'étendant radialement vers l'extérieur. Un des bras 24 du carter intermédiaire 16 contient un arbre radial 26 dont l'extrémité interne est reliée par un couple de pignons coniques à l'arbre d'entraînement 28 du compresseur haute pression 18. L'extrémité radialement externe de l'arbre radial 26 est reliée par un autre couple de pignons coniques à l'entrée d'une boîte d'engrenages 32, comportant des pignons d'entraînement d'une pluralité d'équipements, tels que par exemple, une pompe à huile, une pompe hydraulique, une pompe à carburant, un démarreur et un générateur électrique.

La figure 2 représente une partie d'une boîte d'engrenages 32 selon la technique antérieure. Une telle boîte d'engrenages 32 comprend une paroi latérale avant 34 et une paroi latérale arrière 36 entre lesquelles s'étendent une pluralité d'arbres de transmission 38 chacun couplé à un équipement tournant 40.

L'arbre de transmission 38 est guidé en rotation à ses extrémités dans deux paliers à roulement dont l'un 42 est à billes et l'autre 44 est à rouleaux. Les paliers 42, 44 comprennent chacun une bague interne 46 portée par l'arbre de transmission 38 et une bague externe 48 fixée au moyen de vis 50 sur des bossages 52 des parois avant 34 ou arrière 36. Chaque palier 42, 44 est alimenté en huile par un circuit spécifique de lubrification.

L'arbre de transmission 38 porte une roue dentée 54 agencée entre les deux paliers à roulement 42, 44 et en prise avec un pignon d'entraînement 56.

Le boîtier 40 d'un équipement est fixé par vissage ou par un collier de fixation sur la paroi latérale avant 34. Cet équipement comprend un arbre d'entraînement 58 dont la surface externe comporte des cannelures axiales engagées dans des cannelures axiales complémentaires de l'arbre de transmission 38.

En fonctionnement, les charges radiales dues à l'engrènement entre la roue dentée 54 et le pignon d'entraînement 56 sont reprises par les deux paliers 42 et 44.

Ce type de configuration n'est toutefois pas satisfaisant car il impose l'utilisation de deux paliers à roulement 42, 44 standardisés qui sont souvent surdimensionnés.

L'invention apporte une solution à cet inconvénient ainsi qu'à ceux mentionnés précédemment en remplaçant le palier à roulement à billes par un palier lisse 60 et en déplaçant le palier à rouleaux 62 dans le plan radial du pignon d'entraînement 56.

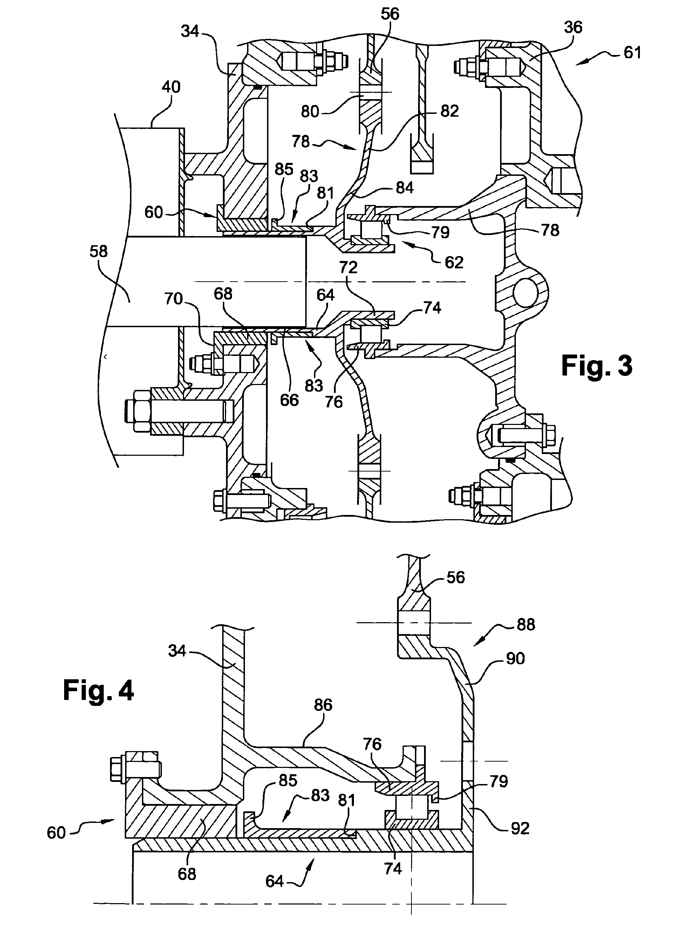

Comme représenté en figure 3, l'arbre de transmission 64 comporte une partie sensiblement cylindrique avant 66 dont l'extrémité est engagée et guidée en rotation dans une bague 68 du palier lisse 60. Cette bague est montée dans un alésage de la paroi avant 34 de la boîte d'engrenages 61 et comprend un rebord 70 fixé par des vis sur la paroi avant 34.

L'extrémité arrière de l'arbre de transmission 64 comprend une portée cylindrique 72 portant la bague interne 74 du palier à rouleaux 62. La bague externe 76 de ce palier est portée par l'extrémité avant d'un embout cylindrique 78 solidaire de la paroi arrière 36 de la boîte d'engrenages 61.

L'extrémité arrière de la bague externe 76 solidaire de l'embout 78 comprend un rebord annulaire radial 79 orienté vers l'intérieur. L'arbre 64 comprend un épaulement 81 sur lequel s'appuie l'extrémité arrière d'un anneau 83 comprenant à son extrémité avant un rebord annulaire radial 85. L'anneau 83 est dimensionné axialement de manière à ce que le rebord annulaire 85 soit espacé de l'extrémité arrière de la bague fixe 68 d'un jeu identique à celui séparant le roulement à rouleaux de la butée 79. Les deux rebords annulaires 79, 85 forment des butées axiales limitant le déplacement de la ligne de rotor du fait du glissement du roulement à rouleaux sur sa piste. Ces butées 79, 85 permettent ainsi de maintenir l'alignement du roulement 62 avec la roue dentée 56.

L'intégration d'une butée 85 limitant le glissement de l'arbre 64 vers la paroi arrière 36 est rendue nécessaire par le fait que l'on utilise un palier lisse 60 au lieu d'un palier à roulement lequel intégrait antérieurement un rebord annulaire formant la seconde butée axiale.

La roue dentée 78 portée par l'arbre 64 est en prise à sa périphérie externe avec le pignon d'entraînement 56. Les dentures en prise de la roue et du pignon sont situées dans un plan radial passant par le palier à rouleaux 62. La roue dentée 78 est reliée à l'extrémité avant de la portée cylindrique 72 par une paroi de révolution comprenant une première partie externe 82 sensiblement radiale et une deuxième partie interne tronconique 84 reliée à la portée cylindrique 72. Cette partie de paroi tronconique 84 libère sur l'arbre 64 un espace que l'on peut utiliser pour le montage du palier à rouleaux 62 au droit du pignon d'entraînement 56.

Dans une variante de réalisation de l'invention représentée en figure 4, l'embout 86 portant la bague externe 76 est solidaire de la paroi avant 34 de la boite d'engrenages. Dans cette réalisation, une roue dentée 88 reliée à l'extrémité arrière de l'arbre 64 comprend une première partie externe tronconique 90 portant une denture en prise avec une denture du pignon 56 et une deuxième partie interne sensiblement radiale 92. Avec ce montage, l'arbre 64 et les deux paliers 60, 62 sont portés par la paroi avant 34 de la boite d'engrenages, ce qui permet de réaliser un montage par l'avant plus simple de l'ensemble précité. Le maintien axial de l'arbre 64 est réalisé de manière identique à ce qui a été décrit en référence à la figure 3.

Grâce au montage selon l'invention, la charge radiale peut être reprise intégralement par le palier à rouleaux 62 tandis que le palier lisse 60 sert à éviter le basculement de l'arbre de transmission 64. La dimension radiale du palier lisse 60 peut être réduite en comparaison de celle d'un palier à roulement à billes. Un tel palier lisse 60 s'avère également plus fiable qu'un palier à roulement à billes et ne nécessite pas obligatoirement de circuit de lubrification spécifique.

L'invention n'est pas limitée à l'utilisation d'un palier à rouleaux comme décrit en référence aux figures 3 et 4 et il serait possible de remplacer le palier à rouleaux par un palier à roulement à billes.

Bien qu'en figure 3, un seul équipement 40 soit visible, il est clair que l'invention est applicable à tous les arbres de transmission de la boîte d'engrenages.

## Revendications

1. Boîte d'engrenages (61) dans une turbomachine pour l'entraînement en rotation d'au moins un équipement tournant, tel par exemple qu'un alternateur ou une pompe, comprenant un arbre de transmission (64) guidé en rotation dans des paliers (60, 62) et portant une roue dentée (78) en prise avec au moins un pignon d'entraînement (56) en rotation, **caractérisée en ce que** l'un des paliers est un palier à roulement (62) monté à l'intérieur de la roue dentée (78) et dans un plan radial contenant la roue dentée (78) et le pignon d'entraînement (56) et **en ce qu'**un autre palier est un palier lisse (60) de reprise d'efforts de basculement de l'arbre de transmission.

2. Boîte selon la revendication 1, **caractérisée en ce que** les deux paliers (60, 62) sont montés aux extrémités de l'arbre de transmission (64).

3. Boîte selon la revendication 1 ou 2, **caractérisée en ce que** le palier lisse (60) comprend une bague (68) montée dans un alésage d'une paroi (34) de la boîte d'engrenages.

4. Boîte selon la revendication 3, **caractérisée en ce qu'**une extrémité de l'arbre de transmission (64) est guidée en rotation dans le palier lisse (60).

5. Boîte selon l'une des revendications 1 à 4, **caractérisée en ce que** le palier lisse (60) est en bronze ou en matériau composite.

6. Boîte selon l'une des revendications 1 à 5, **caractérisée en ce que** le palier à roulement (62) comprend une bague interne (74) montée sur l'arbre de transmission (64) et une bague externe (76) portée par un embout cylindrique (78) solidaire d'une paroi (34, 36) de la boîte d'engrenages (61).

7. Boite selon la revendication 6, **caractérisée en ce que** le déplacement axial de l'arbre (64) est limité par deux butées axiales (79, 85) dont l'une est formée par un rebord annulaire de l'extrémité arrière de la bague externe (76) et l'autre est formée par un rebord annulaire avant de l'arbre de transmission (64) coopérant avec une extrémité arrière d'une bague fixe (68) du palier lisse (60).

8. Boîte selon l'une des revendications 1 à 7, **caractérisée en ce que** la roue dentée (78) est reliée à l'arbre de transmission (64) par une paroi tronconique (84, 90).

9. Boîte selon l'une des revendications 1 à 8, **caractérisée en ce que** l'extrémité de l'arbre de transmission (64) guidée par le palier lisse (60) forme un moyeu à surface interne cannelée destiné à recevoir une extrémité cannelée d'un arbre rotatif (58) de l'équipement tournant.

10. Boîte selon l'une des revendications 1 à 9, **caractérisée en ce que** le palier à roulement est un palier du type à rouleaux ou à billes.

11. Turbomachine, telle qu'un turboréacteur ou un turbopropulseur, **caractérisée en ce qu'**elle comprend une boîte d'engrenages (61) selon l'une des revendications 1 à 10.

## Patentansprüche

1. Getriebe (61) in einer Turbomaschine bzw. einem Turbotriebwerk zum drehenden Antrieb zumindest einer drehbaren Einrichtung, wie etwa eines Wechselstromgenerators oder einer Pumpe, enthaltend eine Getriebewelle (64), die in Lagern (60, 62) drehbar geführt ist und ein Zahnrad (78) trägt, das mit zumindest einem Antriebsritzel (56) drehend in Eingriff steht, **dadurch gekennzeichnet, dass** eines der Lager ein Wälzlager (62) ist, das innerhalb des Zahnrads (78) in einer radialen Ebene montiert ist, die das Zahnrad (78) und das Antriebsritzel (56) enthält, und dass ein weiteres Lager ein Gleitlager (60) ist, das zum Aufnehmen von Schwenkkräften der Getriebewelle vorgesehen ist.

2. Getriebe nach Anspruch 1, **dadurch gekennzeichnet, dass** die beiden Lager (60, 62) an den Enden der Getriebewelle (64) montiert sind.

3. Getriebe nach Anspruch 1 oder 2, **dadurch gekennzeichnet, dass** das Gleitlager (60) einen Ring (68) enthält, der in einer Bohrung einer Wandung (34) des Getriebes gelagert ist.

4. Getriebe nach Anspruch 3, **dadurch gekennzeichnet, dass** ein Ende der Getriebewelle (64) in dem Gleitlager (60) drehend geführt ist.

5. Getriebe nach einem der Ansprüche 1 bis 4, **dadurch gekennzeichnet, dass** das Gleitlager (60) aus Bronze oder einem Verbundmaterial besteht.

6. Getriebe nach einem der Ansprüche 1 bis 5, **dadurch gekennzeichnet, dass** das Wälzlager (62) einen Innenring (74) aufweist, der an die Getriebewelle (64) montiert ist, sowie einen Außenring (76), der von einem zylindrischen Endstück (78) getragen wird, das fest mit einer Wandung (34, 36) des Getriebes (61) verbunden ist.

7. Getriebe nach Anspruch 6, **dadurch gekennzeichnet, dass** die axiale Verlagerung der Welle (64) von zwei axialen Anschlägen (79, 85) eingegrenzt wird, von denen einer aus einer ringförmigen Randleiste des hinteren Endes des Außenrings gebildet wird (76) und der andere von einer ringförmigen vorderen Randleiste der Getriebewelle (64) gebildet wird, die mit einem hinteren Ende eines festen Rings (68) des Gleitlagers (60) zusammenwirkt.

8. Getriebe nach einem der Ansprüche 1 bis 7, **dadurch gekennzeichnet, dass** das Zahnrad (78) über eine kegelstumpfförmige Wandung (84, 90) mit der Getriebewelle (64) verbunden ist.

9. Getriebe nach einem der Ansprüche 1 bis 8, **dadurch gekennzeichnet, dass** das Ende der Getriebewelle (64), das über das Gleitlager (60) geführt wird, eine Nabe mit geriffelter Innenfläche bildet, die dazu bestimmt ist, ein geriffeltes Ende einer Drehwelle (58) der drehbaren Einrichtung aufzunehmen.

10. Getriebe nach einem der Ansprüche 1 bis 9, **dadurch gekennzeichnet, dass** das Wälzlager ein Lager vom Typ Rollen- oder Kugellager ist.

11. Turbomaschine bzw. Turbinentriebwerk, wie etwa Turbostrahltriebwerk oder Turbopropellertriebwerk, **dadurch gekennzeichnet, dass** sie bzw. es ein Getriebe (61) nach einem der Ansprüche 1 bis 10 aufweist.

## Claims

1. A gearbox (61) in a turbine engine for imparting rotary drive to at least one piece of rotary equipment, such as for example an alternator or a pump, the gearbox having a transmission shaft (64) guided in rotation in bearings (60, 62) and carrying a toothed wheel (78) meshing with at least one rotary drive gearwheel (56), the gearbox being **characterized in that** one of the bearings is a rolling bearing (62) mounted inside the toothed wheel (78) in a radial plane containing the toothed wheel (78) and the drive gearwheel (56), and **in that** the other bearing is a smooth bearing (60) for taking up forces tending to tilt the transmission shaft.

2. A gearbox according to claim 1, **characterized in that** the two bearings (60, 62) are mounted at respective ends of the transmission shaft (64).

3. A gearbox according to claim 1 or claim 2, **characterized in that** the smooth bearing (60) comprises a ring (68) mounted in a bore in a wall (34) of the gearbox.

4. A gearbox according to claim 3, **characterized in that** one end of the transmission shaft (64) is guided in rotation in the smooth bearing (60).

5. A gearbox according to any one of claims 1 to 4, **characterized in that** the smooth bearing (60) is made of bronze or of composite material.

6. A gearbox according to any one of claims 1 to 5, **characterized in that** the rolling bearing (62) comprises an inner ring (74) mounted on the transmission shaft (64) and an outer ring (76) carried by a cylindrical endpiece (78) secured to a wall (34, 36) of the gearbox (61).

7. A gearbox according to claim 6, **characterized in that** axial movement of the shaft (64) is limited by two axial abutments (79, 85), one of which is formed by an annular rim at the rear end of the outer ring (76) and the other of which is formed by a front annular rim of the transmission shaft (64) co-operating with a rear end of a stationary ring (68) of the smooth bearing (60).

8. A gearbox according to any one of claims 1 to 7, **characterized in that** the toothed wheel (78) is connected to the transmission shaft (64) by a frustoconical wall (84, 90).

9. A gearbox according to any one of claims 1 to 8, **characterized in that** the end of the transmission shaft (64) that is guided by the smooth bearing (60) forms a hub having a fluted inside surface for receiving a fluted end of a rotary shaft (58) of the rotary equipment.

10. A gearbox according to any one of claims 1 to 9, **characterized in that** the rolling bearing is a bearing of the roller type or of the ball type.

11. A turbine engine, such as a turboprop or a turbojet, the engine being **characterized in that** it includes a gearbox (61) according to any one of claims 1 to 10.
